(19) **Europäisches Patentamt**
**European Patent Office**
**Office européen des brevets**

(11) **EP 2 270 476 A1**

(12) # EUROPEAN PATENT APPLICATION

(43) Date of publication:
**05.01.2011 Bulletin 2011/01**

(51) Int Cl.:
***G01N 21/64*** (2006.01)

(21) Application number: **10179825.4**

(22) Date of filing: **29.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **02.11.2007 GB 0721564**

(62) Document number(s) of the earlier application(s) in accordance with Art. 76 EPC:
**08843478.2 / 2 205 962**

(71) Applicant: **GE Healthcare UK Limited**
**Little Chalfont**
**Buckinghamshire HP7 9NA (GB)**

(72) Inventor: **Thomas, Nicholas**
**Cardiff South Glamorgan CF14 7YT (GB)**

(74) Representative: **Bryan, Ian Bennett**
**GE Heatlhcare Limited**
**Pollards Wood**
**Nightingales Lane**
**Chalfont St Giles**
**Buckinghamshire HP8 4SP (GB)**

Remarks:
This application was filed on 27-09-2010 as a divisional application to the application mentioned under INID code 62.

(54) **Microscopy imaging phantoms**

(57) The invention relates to imaging phantoms for validation, optimisation and calibration of microscopy instrumentation and software used for analysis of microscope images. The materials and methods of the invention find particular use in high content screening and high content analysis.

FIGURE 2

EP 2 270 476 A1

FIGURE 6

## Description

TECHNICAL FIELD

The present invention relates to imaging phantoms for validation, optimisation and calibration of microscopy instrumentation and software used for analysis of microscope images.

BACKGROUND TO THE INVENTION

The use of imaging phantoms (synthetic models of biological specimens) is common in 3D imaging at a macro scale with X-ray, CT, PET, ultrasound and MRI instruments intended for imaging of animals and humans (Pogue, B.W. and Patterson, M.S., J. Biomed. Opt., (2006), 11 (4), 041102; J. Neurosurg., (2004), 101(2), 314-22.). Phantoms allow development and validation of new imaging applications as well as providing an invariant specimen for instrument calibration.

In the field of microscopy, calibration and imaging standards are less well developed. Some work has been done using light sources to substitute for a fluorescent specimen for calibration (Lerner, J.M., Zuckerm, R.M., Cytometry A., (2004), 62(1), 8-34), and bead sets designed for flow cytometry calibration (Schwartz, A., et al., Cytometry, (1998), 33(2), 106-14) may be used as intensity and resolution standards. However, in flow cytometry the instrumentation measures only intensity information and consequently while beads developed for calibration of flow cytometry instruments may be used for intensity and alignment calibration in fluorescence microscopes, they do not provide a representation of complex biological structures desired in an imaging phantom.

US 2007/0190566 (Montagu) describes a planar standard for calibration of fluorescence imaging micro-array scanners comprising a fluorescent layer overlaid with a mask of non-fluorescent material with defined openings producing a regularly patterned fluorescent image which may be used for calibration and to determine imaging resolution. While such a device is suitable for determining the optical resolution of a microscope or other imager for resolving structures disposed in regular patterns, e.g. a nucleic acid microarray, the standard is not suitable for representing the natural variation inherent in a biological sample and the method of construction precludes use of multiple fluors or other imaging agents within a single device. Consequently the device of US 2007/0190566 has significant limitations as a biologically representative imaging phantom suitable for cellular and tissue imaging applications.

Similarly US 6984828 (Montagu) and US 6472671 (Montagu) describe a solid layer of fluorescent material overlaid with a thin opaque mask, wherein the mask has openings of defined dimensions to create a regular planar pattern of fluorescence. These devices are suitable as resolution standards but have considerable limitations as true biological imaging phantoms.

US2006/0134606 (Montagu) discloses devices for immobilizing biological materials for analysis, such as proteins and nucleic acids, as a replacement for nitrocellulose membranes used in Southern blotting and other analogous solid phase analysis methods. The devices comprise ultra thin layers of micro-porous membrane on a solid substrate. Materials to be analysed may be applied to the substrate supported on microscope slides or multi-well plates for analysis by imaging, including by microscopy. The document does not describe the preparation or use of standards for imaging, nor standards which comprise detectable elements representative of cells or tissues.

US 7262842 (Ermantraut et al.) describes a fluorescence intensity calibration standard comprising a non-fluorescent support overlaid with fluorescent polymer in regions of varying thickness produced by photolithography or spotting wherein fluorescent intensity is controlled by the thickness of the applied fluorescent layer. Such devices are suitable for testing the detection sensitivity of imaging instrumentation; however the method of preparation precludes the use of multiple fluors or the introduction of random spacing required to produce a phantom representative of cellular or tissue specimens.

EP 1774292 (Ge et al.) describes a calibration slide for fluorescence detection instruments comprising a microarray of spots of inorganic phosphors on a glass slide produced by contact or screen printing. This device has the benefit of stable fluorescence provided by the inorganic phosphors, but suffers from the same limitations as a biologically representative phantom as described above for devices and methods.

EP 259137 (Schwartz) describes methods for mounting fluorescent microspheres in a gel on a microscope slide beneath a coverslip wherein the beads are randomly distributed. This method produces a stable specimen which may be used to test sensitivity and image alignment in fluorescent microscopy, however the discrete nature of the fluorescent sources used and their uncontrolled distribution renders this method unsuitable for producing microscopy imaging phantoms which represent biological structures with defined separation and inclusion of structures within other structures. Similarly WO 2006/003423 describes a methods for mounting fluorescent beads in a temperature responsive gel on a microscope slide which suffers the same limitations as an imaging phantom as the preceding method.

WO 2007/056977 and US2008/0233652 (Kreyenschmidt) describe calibration standards comprising plastic mouldings containing chromium, cadmium and other heavy metals for use in calibration of X-ray fluorescence and laser induced plasma spectroscopy. The calibration methods described can be used to determine contaminant levels in polymers, particularly contaminants present in electric and electronic devices. The document does not describe the preparation or use of standards for imaging, nor standards which comprise detectable elements representative of cells or tissues.

WO98/49537 (Brakenhoff et al.) describes the fabrication and use of a calibration layer comprising an optically transparent polymer containing a photo-bleachable luminescent material for calibration of optical imaging devices. The photo-bleaching properties of the device allow the distribution of excitation and emission light to be determined separately. This document does not describe the preparation or use of standards which comprise detectable elements (structures) representative of cells or tissues. The calibration layer of WO98/49537 is by definition uniform, as necessary to achieve analysis of the distribution and/or uniformity of excitation and/or detection within the instrumentation under calibration, and thus lacks the structural variations necessary for representing cells or tissues.

True imaging phantoms suitable for use in microscopy, and particularly for automated microscopy as applied in high content screening (HCS) (Methods Enzymol., (2006), 414, 468-83) and high content analysis (HCA) (Biotechnol. J. (2007), 2(8), 938-40) are lacking. HCS and HCA procedures use high-throughput automated microscopes, for example IN Cell Analyzer 1000 (GE Healthcare), to rapidly acquire many hundreds or thousands of images of cell or tissue specimens which are subsequently analysed to abstract quantitative data informative of a biological process, using image analysis software, for example IN Cell™ Investigator (GE Healthcare).

The biological specimens used for these procedures vary widely from simple cell cultures to complex stem cell cultures and tissue sections. The specimens may be unstained and may be viewed by phase contrast illumination. Alternatively, the specimens may be stained with fluorescent or other dyes to highlight cellular structures. The specimens may additionally comprise specific cellular reporters such as fluorescently stained antibodies of fusions of cellular proteins with fluorescent proteins, alone or in combination, with the purpose of reporting on the activity of a specific cellular event, for example the activity of a cellular signalling pathway responding to the binding of a test drug at a cell surface receptor with subsequent transduction of signalling to the cell nucleus resulting in expression of one or more genes.

The quality of the data produced from such studies is highly dependent on both the image quality produced by the microscope and the quality of the software analysis of the images. Establishing and maintaining image quality requires that multiple components in the automated microscope, including illumination and light filters, operate optimally. As a consequence, there is a need for invariant samples that can be used repeatedly to calibrate and validate system performance over time and across different instruments. It is particularly advantageous if such samples are representative of the dimension and complexity of the cells and tissues likely to be imaged by the automated microscopy instruments.

Similarly for image analysis software, the availability of invariant imaging standards which exhibit similar complexities in structure to biological specimens and which can be produced in large numbers will enable validation of software parameter settings for acquiring quantitative data.

Suitable phantom standards for HCS and HCA should be:

i) Invariant: standards produced in bulk should be stable, reproducible and robust to allow large numbers of analyses over time in the course of routine instrument set-up, calibration and monitoring and in development of image analysis routines.

ii) Flexible: standards should be capable of being manufactured in a range of formats to allow testing of a wide range of instrument settings and analysis parameters.

iii) Representative: standards should be representative of typical cellular and tissue specimens, i.e. provide a true imaging phantom.

Required therefore, is a stable, reproducible specimen, capable of being manufactured in bulk to tight tolerances, which provides sufficient complexity to form a test and calibration standard for HCS/HCA imaging instrumentation and image analysis software, which overcomes the limitations of using beads designed for flow cytometry which provide only intensity information, or planar fluorescent standards designed for microarray scanners which do not provide suitable complexity or dimensions suitable for use in cell or tissue microscopy.

SUMMARY OF THE INVENTION

In a first aspect, there is provided a solid prefabricated polymeric matrix material comprising one or more detectable internal elements which when imaged by microscopy are representative of cells or tissue.

The present invention therefore relates to an imaging standard suitable for use in high content analytical imaging applications, in particular for the calibration of image analysis instrumentation and software. The imaging standard is based on combinations of different detectable (e.g. fluorescent) materials dispersed in a stable matrix material which provide both intensity and spatial standardisation in imaging phantoms of a suitable dimensional scale for application on HCS/HCA platforms.

In one embodiment according to the invention, the polymeric matrix material is an elongated solid structure (or block) wherein a cross-section of the elongated structure comprises one or more characterising feature(s) of the cells or tissue which extend lengthwise through the elongated structure. In this embodiment, preferably, the detectable internal elements comprise fabricated composite structures representative of eukaryotic cells.

The expression "characterising features" of said cells or tissue as used herein is intended to mean typical cellular and sub-cellular structures, for example, nuclei, mitochondria or any other cellular structure that may be imaged by microscopy, wherein such structures are represented in various embodiments of the invention by suitable arrangement of detectable elements. For example, in one embodiment of the present invention a cell may be represented by a polymer rod of circular cross-section coated with a second polymer such that when cut in cross-section the two-polymer composite structure comprises a round disc with a central core and a concentric ring, representative of a cell nucleus and cytoplasm respectively.

By the term "composite structures", it is meant any structure comprising more than one element intended and designed to represent a cell or part thereof. Composite structures may be simple or complex depending on the complexity of the biological structure to be represented. In the case of a low detail representation of a single cell, the composite structure may comprise only two elements representative of nucleus and cytoplasm. In more complex representations, the composite structure may comprise many elements, representative of for example, cytoplasm, nucleus, mitochondria, golgi, endoplasmic reticulum and other sub-cellular organelles as desired and required in the intended use of the imaging phantom.

Preferably, each of the detectable internal elements comprises a visualisation agent, more preferably each said visualisation agent being detectably different in each of the internal elements. Suitable visualisation agents may be selected from coloured dyes, fluorescent dyes or refractive index modifiers.

Preferably, the elongated solid structure contains at least two and preferably more that two, and in some cases three or four and more detectable internal elements. It is also possible for the detectable internal elements to have the same or different dimensions depending on the particular desired cellular or tissue representation of the imaging phantom. For example, where the imaging phantom is to be representative of a population of cultured cells imaged by microscopy, the elongated structure would comprise a block comprising a number of internal composite elements each representative of a single cell, wherein the internal composite elements comprise a suitable number, disposition and size to represent isolated cells in culture. The dimensions of the block are chosen to suit the imaging application and instrumentation. For example, for imaging on a standard laboratory microscope the block dimensions are chosen to fit on a microscope slide (typically 76mm x 26mm). For imaging on automated microscopes and other instrumentation designed to image multi-well plates, for example 96-well microtiter plates, the block dimensions are chosen to allow cross-sections of the block to be fitted at the bottom of the wells of the plate(s) used for imaging. The dimensions of the internal composite elements are chosen to be in scale with the cell structure(s) required by the imaging application, for example to represent cell nuclei and cytoplasm. Suitable dimensions for blocks used to prepare imaging phantoms for use with microscope slides are 0.2 - 2cm cubes, preferred dimensions being 0.5cm - 1cm cubes. Suitable dimensions for internal composite elements are highly dependent on the biological structure to be represented in the imaging phantom; for example, in phantoms representing mammalian cells, dimensions will typically be in the range $0.5\mu m$ - $200\mu m$, with preferred dimensions in the range $1\mu m$ - $50\mu m$. It will be well known by those skilled in the art that eukaryotic and mammalian cells vary considerably in their size from cell type to cell type and that within the same cell type significant size variations can occur, either through clonal variation and mutation or due to changes in cell size as cells go through the cell cycle in preparation for cell division. By suitable choice of the dimensions used for internal composite elements, imaging phantoms may be prepared which range from being substantially invariant within a population of internal elements to those having a very wide size distribution where this is required to represent a particular biological specimen or to evaluate imaging performance over a wide range of dimensions.

The composition of the polymeric matrix material is not critical, provided that it is both rigid enough to fix the positions of the internal elements lengthwise in the elongated solid structure, yet is capable of being cut into slices to a suitable thickness by microtoming or other suitable technique. Preferably, the polymeric matrix material is a transparent or translucent polymer, suitably selected from synthetic polymers such as polyacrylates, polymethacrylates, epoxy-resins and the like (Histochem J. (1999), 8, 495-505). Alternatively, the polymeric matrix may comprise a natural or synthetic wax such as paraffin or ester waxes such as those commonly used for embedding biological material for sectioning (Methods Mol. Biol., (1999), 115, 275-9). For certain applications, it may also be advantageous to use naturally occurring polymers or biopolymers, for example rubber, gelatine, and the polysaccharides dextran and cellulose and their derivatives such as cellulose acetate. A cross-linking agent is preferably employed to prevent swelling or distortion and to ensure that the internal elements are securely held in place. Alternatively, the polymer may comprise a photopolymer, a polymer which is caused to polymerise from a monomeric solution by exposure to light or by activation of a polymerisation initiator by the action of light. Suitable photopolymers include but are not restricted to poly-N-isopropylacrylamide and poly-acrylamide (Biomacromolecules, (2005), 6(1), 414-24), poly(ethylene glycol) diacrylate (Biomaterials, (2001), 22(9), 929-41).

In a preferred embodiment, the elongated solid structure (or block) is provided with a base comprising a rigid material suitable for clamping. This permits the whole of the elongated structure to be available for microtoming into slices of a suitable thickness.

In a second embodiment, the polymeric matrix material is substantially spherical and the detectable internal elements comprise encapsulated beads. In this embodiment, preferably, the detectable internal elements are representative of organelles of a eukaryotic cell.

In this embodiment, preferably the matrix material and each of the one or more detectable internal elements comprises a visualisation agent. More preferably, each said visualisation agent is detectably different in each of the internal elements. Suitable visualisation agents may be selected from coloured dyes, fluorescent dyes or refractive index modifiers.

Preferably, there are at least two and preferably more than two, and in some cases three or four and more detectable internal elements, each said internal element representing a component of the cell to be represented by the substantially spherical composite. For example, the substantially spherical matrix may represent a cell cytoplasm containing four detectable and individually distinguishable internal elements, wherein one detectable element represents the cell nucleus, two elements are representative of mitochondria and one element represents endoplasmic reticulum. It is also possible for either or both of the substantially spherical and the detectable internal elements to have the same or different dimensions depending on the particular cellular element to be represented. For example, in the representation of a typical mammalian cell, the substantially spherical matrix may be of diameter $10\mu m$ - $100\mu m$, with internal elements representative of nucleus of size $5\mu m$ - $50\mu m$ and mitochondria of $0.1\mu m$ - $50\mu m$ in diameter. It will be well known by those skilled in the art that eukaryotic and mammalian cells vary considerably in their size from cell type to cell type and that within the same cell type significant size variations occur, either through clonal variation and mutation or due to changes in cell size as cell go through the cell cycle in preparation for cell division. By suitable choice of the dimensions used for the substantially spherical matrix and internal elements, imaging phantoms may be prepared which range from being substantially invariant within a population to having a very wide size distribution where this is required to represent a particular biological specimen or to evaluate imaging performance over a wide range of dimensions.

As used herein, the term "coloured dye" refers to a coloured chemical compound which is capable of being fixed to a substrate and additionally has the property of being resistant to photodecomposition. Suitable examples for use in the present invention include dyes having a cyan, magenta, yellow, or optionally black hue.

As used herein, the term "fluorescent dye" refers to a chemical compound, which when excited by exposure to a particular wavelength of light, emits light at a different wavelength. Fluorophores may be described in terms of their emission profile, or "colour." For example, green fluorophores (for example Cy3™ and FITC) may be characterized by their emission at wavelengths generally in the range of 515-540 nanometers. Red fluorophores (for example Cy5 and tetramethylrhodamine) may be characterized by their emission at wavelengths generally in the range of 590-690 nanometers. Suitable examples of fluorophores for use as visualisation agents in the invention described herein include, acridone dyes and derivatives; coumarin dyes and derivatives, for example 7-amino-4-methylcoumarin (AMC, Coumarin 120), 7-amino-trifluoromethylcoumarin); fluorescein and derivatives such as 5-carboxyfluorescein (FAM); rhodamine and derivatives such as 5-carboxyrhodamine (Rhodamine 110-5), 6-carboxyrhodamine (Rhodamine 110-6), 5-carboxyrhodamine-6G (R6G-5 or REG-5), 6-carboxyrhodamine-6G (R6G-6 or REG-6), N, N,N',N'-tetramethyl-5-carboxyrhodamine, N,N,N',N'-tetramethyl-6-carboxyrhodamine (TAMRA or TMR), 5-carboxy-X-rhodamine, 6-carboxy-X-rhodamine (ROX); G-5), 6-carboxyrhodamine-6G (R6G-6 or REG-6), N,N,N', N'-tetramethyl-5-carboxyrhodamine, N,N,N',N'-tetramethyl-6-carboxyrhodamine (TAMRA or TMR), 5-carboxy-X-rhodamine, 6-carboxy-X-rhodamine (ROX) and cyanine dyes such as Cy3 (3-($\varepsilon$-carboxypentyl)-1'-ethyl-3, 3, 3', 3'-tetramethyl-5, 5'-disulphonato-carbocyanine), Cy3.5 (3-($\varepsilon$-carboxypentyl)-1'-ethyl-3,3,3',3'-tetramethyl-4,5,4',5'-(1,3-disulphonato)dibenzo-carbocyanine), Cy5 (1-($\varepsilon$-carboxypentyl)-1'-ethyl-3,3,3',3'-tetramethyl-5,5'-disulphonato-dicarbocyanine, Cy5.5 (1-($\varepsilon$-carboxypentyl)- 1'- ethyl- 3,3,3', 3'- tetramethyl- 4,5,4', 5'-(1,3- disulphonato)-dibenzo-dicarbocyanine, Cy7 (1-($\varepsilon$-carboxypentyl)- 1'- ethyl- 3,3,3', 3'- tetramethyl- 5,5'- disulphonato-tricarbocyanine. The above and additional dyes are described, for example, in US Patent No. 4,268,486 (Waggoner et al); Southwick et al., Cytometry, 11, 418-430 (1990); Mujumdar et al., Bioconjugate Chemistry 4, 105-111, (1993); Waggoner, A.S., Fluorescent Probes for Analysis of Cell Structure and Function and Health by Flow and Imaging Cytometry, Alan R. Liss (1986), and Molecular Probes Handbook of Fluorescent Probes and Research Chemicals, Molecular Inc. 6th edition (1996) Haugland, which are incorporated herein by reference.

As used herein, the term "refractive image modifier" is intended to broadly refer to any material useful to modify the refractive index of a material, such materials being any chemical, compound, monomer, particulate or other material that may be added to a polymer such as to change the refractive index of the polymer in order to change the optical properties of the polymer by altering the refractive index of the polymer to make the polymer more or less visible when viewed by phase contrast microscopy or related light microscopy techniques. Fluorinated polymers are examples of chemicals that increase refractive index, while chlorinated polymers are examples of chemicals that decrease the refractive index.

US 2006/0063880 (Khanna) describes the use of nanoparticles as refractive index modifiers. Nanoparticles with diameter less than the wavelength of visible light do not have a noticeable effect on the transmission of light through a transparent polymer; however nanoparticles of smaller diameter, i.e. less than about 400nm, and preferably of less than about 200nm change the refractive index of the material in which they are suspended. Such nanoparticles may be made of metal oxides such as titanium oxide and/or titanium dioxide, ceramics, in addition to other suitable materials.

In a second aspect, there is provided an imaging phantom comprising a uniform section sliced from an elongated solid structure (or block) comprising a prefabricated polymeric matrix material and one or more detectable internal elements and wherein a cross-section of the elongated structure comprises one or more characterising feature(s) of cells or tissue which extend lengthwise through the elongated structure, said imaging phantom being detectable by a microscopy technique.

Suitably, the thickness of an imaging phantom according to the invention may be in the range from about 1μm to 30μm, more preferably 2μm to 15μm.

In a third aspect, there is provided an imaging phantom according to the second embodiment of the first aspect, which imaging phantom will preferably comprise two or more substantially spherical polymer matrices, each comprising one or more detectable internal elements and wherein said internal elements comprise encapsulated beads said imaging phantom being detectable by a microscopy technique.

Imaging phantoms of the present invention are suitable for detection by microscopy and may be used on a wide range of microscopy instruments available from simple manual bench microscopes to sophisticated automated imaging instrumentation incorporating multiple lenses, illumination sources, filters and cameras. It will be readily appreciated that by introducing appropriate variances in dimensional scale, colour, fluorescence, refractive index and composite complexity, imaging phantoms may be designed and constructed to represent and mimic a very wide range of biological specimens suitable by imaging by a variety of microscopy techniques.

Inclusion of different coloured dyes or other coloured agents within the elements of the imaging phantom renders the phantom suitable for imaging by light microscopy wherein the absorption of transmitted light by the coloured material of the phantom produces a microscope image which may be viewed by eye or captured using an appropriate camera attached to the microscope. Inclusion of different refractive index modifiers within the elements of the imaging phantom renders the phantom suitable for imaging by light microscopy using phase contrast or related specialised illumination techniques, wherein differential refraction of transmitted light by the materials of the phantom produces a microscope image comprising dark and light regions which may be viewed by eye or captured using an appropriate camera attached to the microscope. The inclusion of different fluorescent dyes or other fluorescent within the elements of the imaging phantom renders the phantom suitable for imaging by fluorescent microscopy wherein the absorption of excitation light by the fluorescent material of the phantom and subsequent emission of fluorescent light at a longer wavelength produces a microscope image which may be viewed by eye or captured using an appropriate camera attached to the microscope. Imaging phantoms may be constructed using a single class of visualisation agent, i.e. they may comprise solely coloured dyes, refractive index modifiers or fluorescent dyes. Alternatively, where the imaging phantom is required to be used on more than one type of microscope or on a complex microscope capable of imaging in more than on mode of illumination, e.g. phase-contrast and fluorescence, the imaging phantom may comprise a mixture of different classes of visualisation agents. For example, where it is desired to have an imaging phantom as closely representative of fluorescently stained cultured cells as possible, a combination of refractive index modifiers and fluorescent dyes may be used to provide an imaging phantom with very similar properties to stained cells, i.e. producing microscopy images when illuminated in either phase-contrast or fluorescent modes.

Imaging phantoms according to the present invention, may be used in methods for the measurement and/or calibration and/or validation of one or more parameters of an imaging microscope, or alternatively for validation and/or optimisation of image analysis software. Thus, in a fourth aspect there is provided a method for the calibration or validation of one or more parameters of an imaging microscope. The method will generally comprise acquiring one or more images of at least one and preferably two or more of the imaging phantom(s) as described herein at a first time $(T_1)$ and at a second time $(T_2)$ and then using the images so produced to quantitatively compare the performance of the imaging microscope at said first and second time with reference to known characteristics of the said imaging phantoms. Such known characteristics of imaging phantoms according to the invention may be stored electronically as control values in a database or other electronic format.

Suitably, the imaging microscope parameter is selected to be a predetermined instrument setting, such as illumination intensity or filtration. Obtaining optimal resolution, sensitivity and image quality in any microscope is highly dependent on even illumination of the specimen. Any gradient in illumination intensity across the field of view has the potential to reduce the quality of the resultant image and limit the full visualisation of the specimen. Use of the imaging phantom to regularly check the illumination intensity and evenness at different times allows users of microscopes to maintain their equipment in an optimal configuration. Since the imaging phantom is stable and invariant, unlike a biological specimen which may be subject to damage of fading precluding reproducible imaging, images may recorded at different times and by use of appropriate image analysis software quantitatively compared to ensure that the microscope is performing within desired parameters. For example, an imaging phantom comprising a group or collection of detectable composite elements may be constructed to represent a population of cells dispersed over an imaging area. Imaging of the phantom is undertaken using a microscope set to provide optimal illumination, one or more images are captured digitally and processed using image analysis software to produce quantitative data, for example, the number of objects/image, the mean size of objects etc. Repeating the imaging process at a later time and generating the same data allows a quantitative comparison between the two data sets which allows the operator to determine whether the microscope is still operating optimally or whether some adjustment is required. For example, if the second data set shows that fewer objects were detected than in the first data set this may indicate that the microscope illumination has become sub-optimal reducing the sensitivity or resolution of the system.

Use of the same imaging phantoms for instrument calibration permits reliable luminescent measurement and enables more than one instrument to be set to the same calibration standard. It is therefore to be preferred that the visualisation agents employed in imaging phantoms as described herein are stable and not subject to physical or chemical degradation or photobleaching.

In a fifth aspect, the invention provides a method for calibration and/or validation and/or optimisation of image analysis software. The method comprises: providing an imaging microscope; providing suitable image analysis software for quantitative analysis of images produced by said microscope; providing one or more imaging phantoms as described herein; acquiring one or more images of the or each imaging phantom; using the analysis software to produce quantitative data from at least one of said images; and using the data to quantitatively determine the performance of said software for image analysis with reference to known characteristics of the said imaging phantoms. For example an imaging phantom may be prepared with a pre-determined density of detectable internal elements which have a fixed or variant spacing within a known range determined by the method of construction (e.g. the size of spacer elements between the detectable elements). Such a phantom may be representative of cultured cells growing on a planar surface. To optimise or validate image analysis software, the phantom is imaged and the resulting images analysed using the software under test to determine whether the quantitative data produced by the software correlates with the known parameters of the phantom. For example, imaging of a fluorescent phantom comprising a population of dispersed detectable elements of known area at known frequency/unit area, segmentation of the image by thresholding intensity values within the image to delineate objects and calculation of object area and frequency/area and comparison of data with the known values provides quantitative means for validating the performance of image analysis software to analyse a particular biological specimen represented by the phantom. Furthermore the same procedure may be used to optimise settings, e.g. threshold settings used for image segmentation, within the image analysis software to produce optimal results, i.e. as close as possible to the known values. In this aspect, the phantom has the advantage over a biological specimen in having known values for size, density of objects etc. since the phantom is constructed to pre-determined specifications.

DETAILED DESCRIPTION OF THE INVENTION

In the following description of the invention, reference is made to the figures in which:

Figure 1 illustrates the fabrication of an imaging phantom structure or block by dipping, rolling and drawing of rods;
Figure 2 illustrates the fabrication of an imaging phantom structure or block by self assembly of rod arrays;
Figure 3 illustrates the fabrication of an imaging phantom structure or block by rolling of a planar assembly;
Figure 4 illustrates the fabrication of an imaging phantom structure or block by extrusion moulding;
Figure 5 illustrates the fabrication of an imaging phantom structure or block by random assembly of rod arrays; and
Figure 6 illustrates the fabrication of an imaging phantom structure or block by encapsulation of beads in polymer droplets.

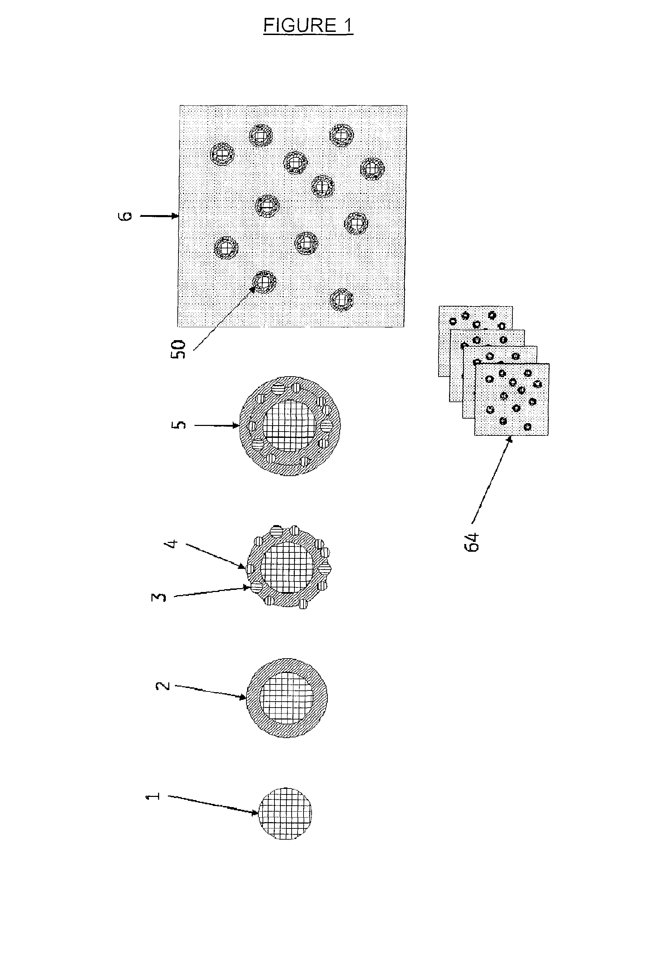

A polymeric matrix material in the form of an elongated solid structure (or block) may be produced by means of a number of alternative techniques depending on whether a regular (ordered) array of internal elements are desired or whether the internal elements are disposed in the matrix in a random or irregular manner. For example, in one procedure, imaging blocks may be produced by a sequential dipping and rolling process as shown in Figure 1. A polymer rod [1] is used as the core of the phantoms to represent a cell nucleus. The rod may comprise a plastic or other polymer containing a coloured dye, a fluorescent dye, a refractive index modifier or any other agent suitable for visualisation by the microscopy technique to be employed in imaging the phantom. For example, for a cell phantom to be used for fluorescent microscopy the rod may comprise a polymer containing Cy$^T$5 (GE Healthcare).

The core rod is dipped one or more times into a melt or viscous solution of a second polymer [2] to coat the core rod with an outer layer of the second polymer to a desired thickness. This coating represents the inner cytoplasmic region of the cellular phantom. The number of times the core rod is dipped into the second polymer may be varied to achieve different coating thicknesses representative of natural cellular variation. As for the first polymer, the second polymer comprises a visualisation agent suited to the microscopy technique to be employed in imaging the phantom, where the agent is different from the agent used in the first polymer such that the two layers representing the nucleus and cytoplasm may be resolved by imaging. For example, for a cell phantom to be used for fluorescent microscopy the coating may comprise a polymer containing Cy™ 3 (GE Healthcare).

Once a desired thickness of the second coating polymer has been achieved, the resulting coated rod is rolled together with further polymer coating rods of smaller diameter [3], [4] to coat the nuclear and cytoplasmic phantom with rods representing sub-cellular organelles, e.g. mitochondria. The coating rods used to represent sub-cellular organelles may be of the same or different sizes and may comprise the same or different visualisation agents, wherein these agents are different from the agents used in the core rod and coating layer. The ratio of coating rods to core rod may be varied to be representative of the biological variation in cells as described herein.

Following coating with rods [3] and [4] the resulting layered rod composite is again re-dipped in the second polymer melt or solution to apply a further coat of polymer representing the outer region of the cell cytoplasm [5]. The number of times the composite is dipped into the coating polymer may be varied to achieve different coating thicknesses representative of variations in cell size.

Once fabrication of the composite rod is complete, the rod is heated and drawn out by pulling, in order to reduce the diameter of the composite to a suitable diameter to represent a cell in microscopy imaging. The degree of drawing required to produce the final cellular scale phantom will depend on the diameter of the elements used during fabrication. A typical mammalian cell nucleus measures $10\mu m$ - $30\mu m$ in diameter; therefore, starting the fabrication process with a core rod [1] of 10mm in diameter would require a reduction in scale of 1:1000 to be achieved during the drawing process to reduce the composite rod to a cellular scale.

Once the rod has been drawn out and reduced to a suitable diameter, the rod is cut into convenient lengths. Multiple lengths [50] from the same or different composite rods are embedded in a support matrix [6]. The support matrix comprises a polymer or resin suitable for sectioning using a microtome such as those routinely used to cut sections from resin embedded tissue samples. The resin is selected to have properties which do not interfere with imaging of the embedded phantoms. Once the support matrix has hardened, the resulting block containing the composite rods is cut into transverse sections [64] of suitable thickness for imaging, typically $2\mu m$ - $20\mu m$.

The support matrix is selected to have suitable properties compatible with the type of microscopy imaging to be employed, for example, for fluorescent microscopy the matrix would be selected to have zero or minimal fluorescence at wavelengths used to excite the fluors within the cellular phantoms.

The resulting slices taken from the matrix block comprise multiple cellular phantoms such that the slices may be applied to a suitable imaging support, for example a glass slide or a multi-well imaging plate and imaged using the same instrument settings and conditions as would be used for imaging a monolayer of cultured cells on the same imaging support. The method of fabrication has many opportunities to introduce variation in the final form, both by design, e.g. the starting diameters of the polymer rods [1], [3], [4], and by random variation, e.g. the radial disposition of the coating rods [3], [4]. Consequently, by fabricating a number of composite rods and embedding them in a common matrix [6], it is possible to produce a final imaging phantom representative of a wide range of biological variations observed in cells such that phantom may used to perform a wide range of microscopy and analysis procedures using an invariant sample.

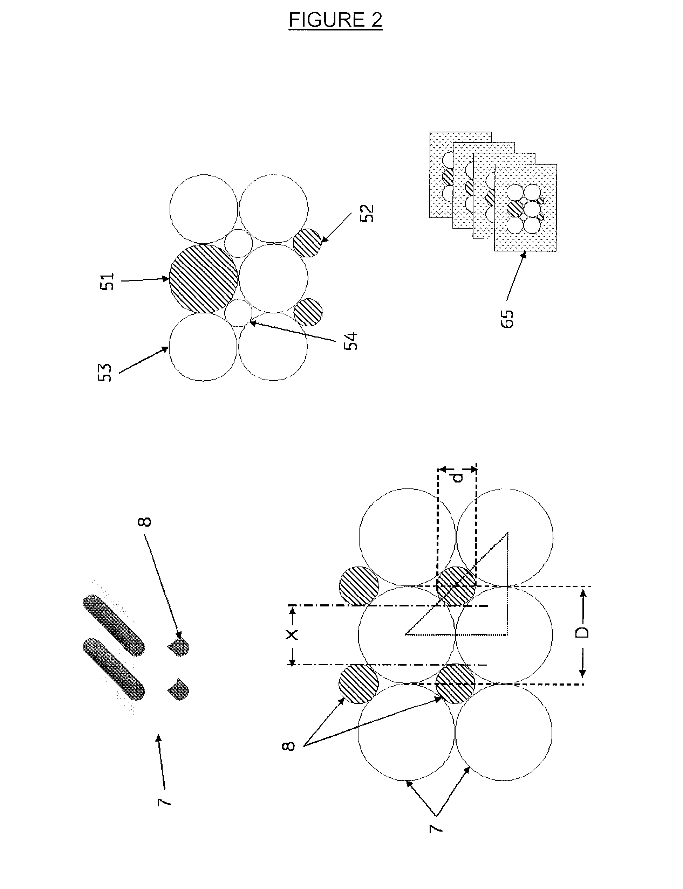

A structure or block for the preparation of an imaging phantom according to the invention may also be fabricated using a self-assembly process as shown in Figure 2. Polymer rods [7] and [8] of suitable dimensions are assembled by stacking using a close packing arrangement wherein small rods [8] are disposed in the interstices between larger rods [7]. This packing arrangement provides a regular array of target rods [8] spaced at regular intervals by spacer rods [7]. Target rods may comprise a plastic or other polymer containing a coloured dye, a fluorescent dye, a refractive index modifier or any other agent suitable for visualisation by the microscopy technique to be employed in imaging the phantom. Spacer rods may comprise the same or different polymer as the target rods without visualisation agent such that when the resulting array is imaged by microscopy only the target rods are visualised.

To assemble the phantom, target and spacer rods are placed into a suitable container in alternating layers to the desired width and height. Following assembly, the container is filled with a support matrix to embed the array. The support matrix comprises a polymer or resin suitable for sectioning using a microtome such as those routinely used to cut sections from resin embedded tissue samples. The resin is selected to have properties which do not interfere with imaging of the embedded phantoms. The rod array may be assembled using rods of the final desired sizes or alternatively the array may be assembled using rods larger than desired in the final phantom, with the size of the array being reduced by drawing out by pulling to reduce the dimensions to the final required size. Once the array is at the final desired size, the block of embedded target and spacer rods may be cut into transverse sections of suitable thickness for imaging [65], typically $2\mu m$ - $20\mu m$.

In such a self assembling arrays with spacer rods of diameter (D) and target rods of diameter (d) the centre-centre distance of the target rods [8] is equivalent to the diameter (D) of the spacer rods [7] and the edge to edge separation (x) between the target rods is equivalent to the differences in diameter between the two sizes of rod. Consequently, such an array can be used to determine the capability of a microscope and associated image analysis software for resolving objects at defined spacing.

Rod sizes may be chosen to yield a range of structures wherein the spacing between the target rods is varied to test and validate imaging over a range of dimensions, or to mimic a biological dimension, for example the spacing between cell nuclei in cultured cells or a tissue section. For a close packed arrangement of rods, the relative diameters of large rods with diameter (D) and small rods or diameter (d) is given by the formula:

$$d = \sqrt{2D^2} - D$$

For example for spacer rods of diameter 10mm, target rods of 4.14mm will form a close packed arrangement with a centre to centre separation of the target rods of 10mm and an edge to edge separation of the target rods of 5.86mm. Assembly of such an array and consequent scale reduction of 1000-fold by drawing out would produce an array with a target rod separation of 5.86$\mu$m.

Target and spacer rods may be selected such that all target rods are of the same size and all spacer rods are of the same size. In alternative arrangements, target and spacer rods may be of two sizes, where the two sizes of rods are used interchangeably for target and spacer rods. In such a configuration, target rods may be large [51] or small [52] and spacer rods may be large [53] or small [54] and by varying the layout of the rods it is possible to vary the spacing between the target rods [51] and [52]. This approach allows a large variety of structures for imaging phantoms to be constructed representative of biological variation, but with dimensions strictly defined by the relative sizes and spacing of target and spacer rods.

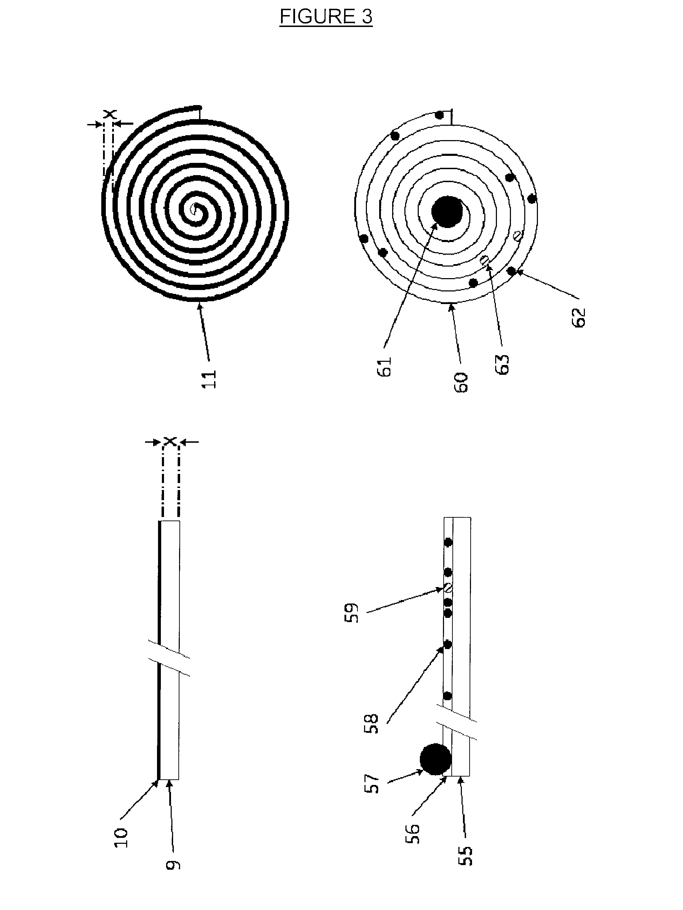

A structure or block for the preparation of an imaging phantom may also be assembled by a rolling process as shown in Figure 3. A planar sandwich comprising at least one spacer layer [9] and at least one target layer [10] where the spacer layer has thickness (X) is assembled. The target layer may comprise a plastic or other polymer containing a coloured dye, a fluorescent dye, a refractive index modifier or any other agent suitable for visualisation by the microscopy technique to be employed in imaging the phantom. The spacer layer may comprise the same or different polymer as the target layer without visualisation agent such that when the resulting phantom is imaged by microscopy only the target layer is visualised.

To construct the imaging phantom the sandwich is rolled to form a tube shown in cross-section [11] comprising a spiral of interleaved spacer and target layers in which the target layers are separated by a distance dictated by the thickness (X) of the spacer layer. Following rolling the spiral tube is heated or otherwise treated to bond the layers such that the tube may be cut into thin transverse sections to form the imaging phantoms. These phantoms comprise discs with a series of alternating layers of target and spacer layers which can be images and the ability of the imaging device to resolve the separate target layers in any direction through 360° determined.

The dimensions of the material in the starting planar sandwich may be chosen to fit the required end use of the phantom in evaluating and validating microscopy instrumentation and/or image analysis software. For example, if it is desired to test the resolving power of 5$\mu$m objects separated by 20$\mu$m, the planar sandwich is assembled using a 5$\mu$m thick target layer and a 20$\mu$m thick spacer layer.

Further refinements the planar sandwich may comprise a number of layers of different thicknesses of either or both target and spacer layers to evaluate the imaging at different resolution using the same principal described above, i.e. that any pattern in the planar sandwich is repeated multiple times through 360° in the final phantom. For example, a planar sandwich comprising a stack of a 50$\mu$m spacer, a 20$\mu$m target, a 20$\mu$m spacer and a 20$\mu$m target would produce an imaging phantom with target layers in repeat pairs 50$\mu$m and 20$\mu$m apart.

The target layer may be continuous or discontinuous and may comprise more than one imaging agent. In one embodiment, a primary spacer layer [55] may support a secondary spacer layer [56] in which are embedded target rods to represent cellular structures in the imaging phantom. Target rods may be of a variety of sizes selected to represent the dimensions of subcellular structures. For example, a large target rod [57] may be used to represent a cell nucleus and further target rods [58] used to represent cellular organelles. Optionally, further target rods [59] comprising a different imaging agent, for example, a different fluorescent dye may be used to represent a different cellular organelle. Rolling of the planar assembly into a spiral [60] around a core target rod [61] produces a structure that when cut in transverse section of appropriate thickness for imaging forms an imaging phantom representative of a cell with a central nucleus [61] surrounded by cellular organelles [62] and [63].

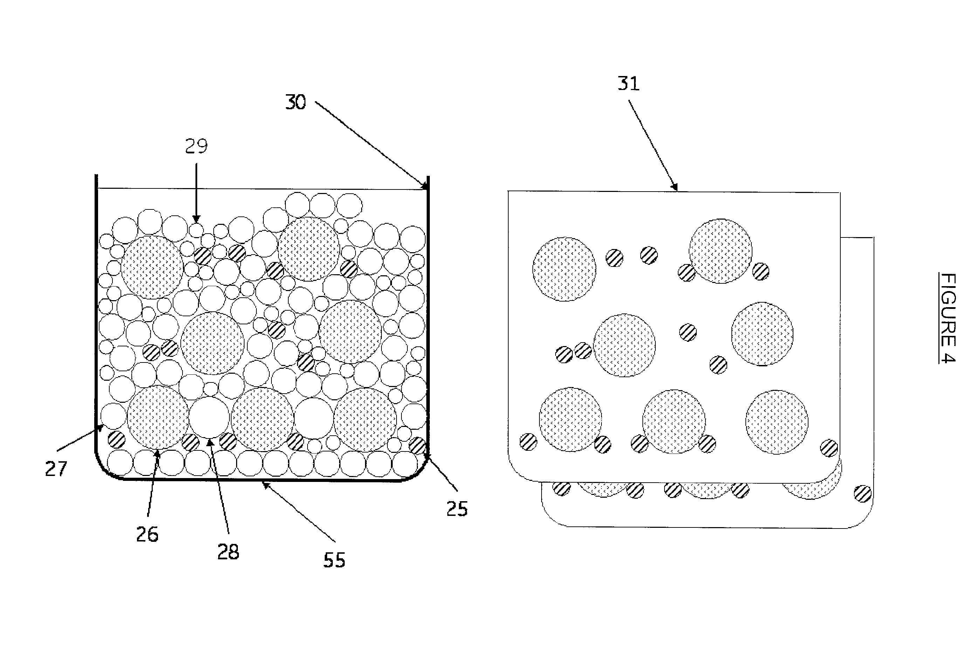

A structure or block for the preparation of an imaging phantom may also be fabricated by random assembly of target and spacer rods as shown in Figure 4. A series of target rods [25], [26] are mixed with a series of spacer rods [27], [28] and [29] in a suitable container such that the rods assemble into a random array. The target rods may comprise a plastic or other polymer containing a coloured dye, a fluorescent dye, a refractive index modifier or any other agent suitable for visualisation by the microscopy technique to be employed in imaging the phantom. The spacer rods may comprise the same or different polymer as the target rods without visualisation agent such that when the resulting phantom is imaged by microscopy only the target rods are visualised.

Target rods may be selected to be of different sizes, for example by employing large diameter rods [26] and small diameter rods [25]. The resulting phantom may mimic a cellular preparation comprising nuclei represented by the large rods and sub-cellular organelles represented by the small rods. The visualisation agent used in the target rods may be the same in all rods, or a different agent may be used in each of the rods. For example, by employing a red fluorescent dye in one population of rods [26] and a green fluorescent dye in a second population of rods [25] the resulting phantom may mimic a fluorescently stained cellular preparation comprising nuclei and sub-cellular organelles stained with red and green fluorescent dyes respectively.

Spacer rods comprise a range of diameters selected to complement the diameter(s) selected for the target rods, such that the spacer rods fill the interstices between the target rods in the random array. The random array may be assembled either by successive addition of target and spacer rods to the container, or by filling the container with a mixture of rods and agitating or vibrating the container such that the different sized rods pack together with small spacer and target rods filling the interstices between the large spacer and target rods. Variation in the sizes of the target and spacer rods together with variation in the relative numbers of each rod type provides a very wide variety of different imaging phantom configurations to be assembled.

Once the rods are packed together in a random array the container [55] containing the arrayed rods is filled with a support matrix [30] to encapsulate the array. The support matrix comprises a polymer or resin suitable for sectioning using a microtome such as those routinely used to cut sections from resin embedded tissue samples. The matrix is selected to have optical properties identical or similar to that of the polymer of the spacer rods. Subsequent transverse sectioning of the embedded arrays yields slices that may be used as imaging phantoms [31] in which only the target areas are visible.

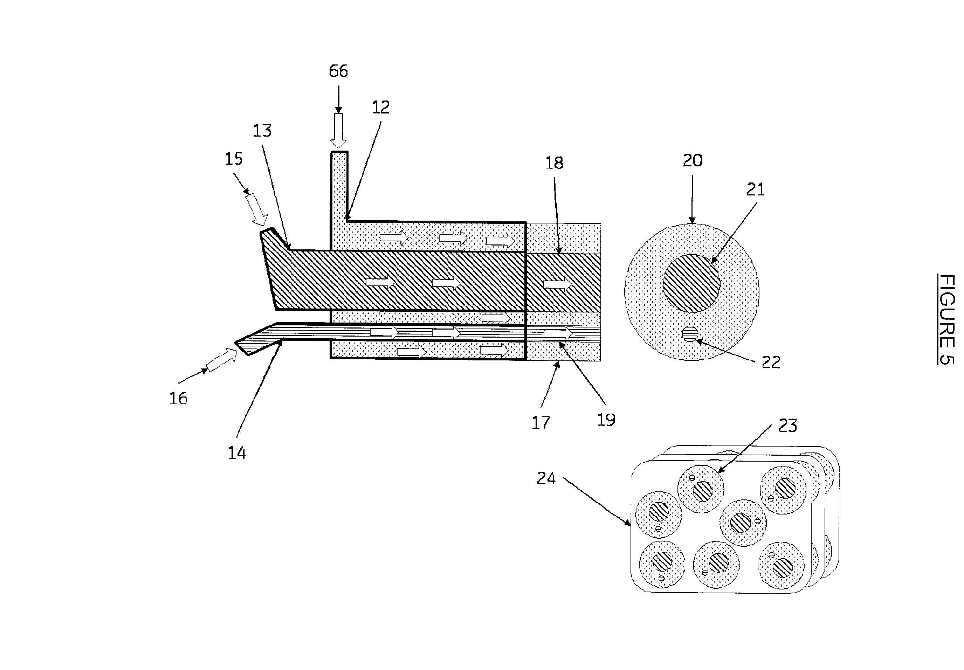

A structure or block for the preparation of an imaging phantom may also be produced using an extrusion process as illustrated in Figure 5. An extrusion device comprising a nozzle [12] surrounding further nozzles [13] and [14] each such nozzle being fed with a liquid or melted matrix material, suitably a polymeric material having different imaging properties. The matrix may be any melted polymer or catalytic resin which when hardened may be cut into slices suitable for imaging.

The matrix mixes fed to each of the inputs [66], [15] and [16] to the device may comprise a coloured dye, a fluorescent dye, a refractive index modifier or any other agent suitable for visualisation by the microscopy technique to be employed in imaging the phantom, where each of the matrix mixes comprises a different agent. For example, where it is desired to make an imaging phantom representative of fluorescently stained cells the matrix mixes would comprise three different fluorescent dyes; the matrix [66] forming the outer shell of the extrusion [17] comprising a fluorescent dye to represent the fluorescently stained cell cytoplasm, the matrix [15] forming the core of the extrusion [18] comprising a second spectrally distinct fluorescent dye to represent the fluorescently stained cell nucleus, and the matrix [16] forming an inclusion [19] within the shell of the extrusion comprising a third spectrally distinct fluorescent dye to represent a fluorescently labelled organelle.

Extrusion of the matrices from the nozzles produces a linear extrusion which when viewed in cross-section comprises three distinct regions of shell [20], core [21] and inclusion [22]. Once the extrusions have been hardened by cooling or resin polymerisation one or more extrusions may be embedded in a support matrix, where the support matrix is selected to have physical properties suitable for cutting into thin transverse sections and imaging properties which do not interfere with imaging of the embedded phantoms. Following embedding of the extrusions the resulting block may be drawn out by pulling to reduce the size of the phantoms to a suitable diameter to represent a cell in microscopy imaging. Finally the reduced block is cut into transverse sections [24] each comprising a number of imaging phantoms [23] suitable for imaging.

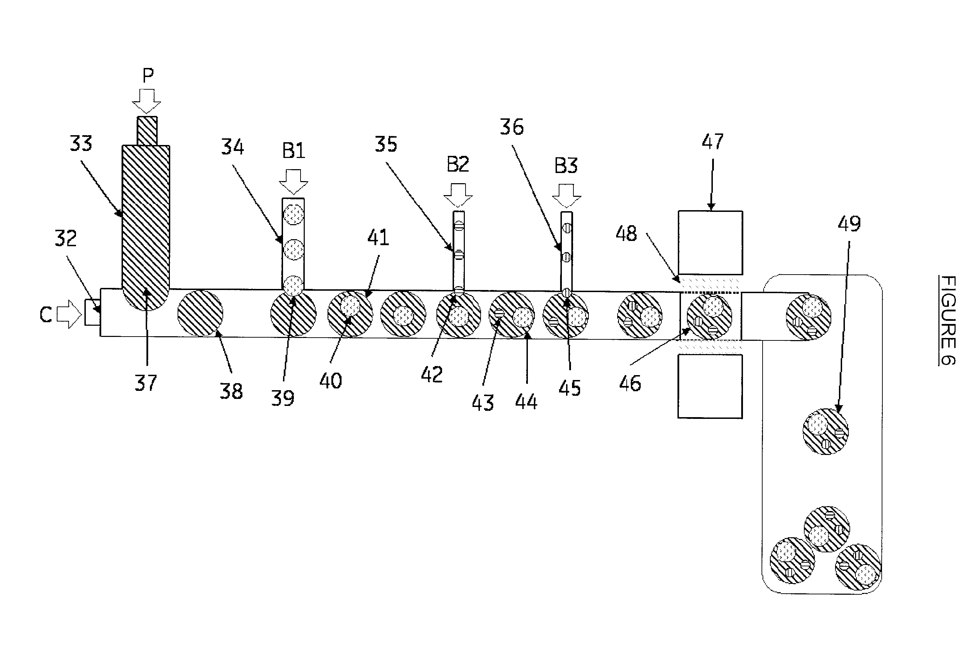

An imaging phantom may also be fabricated by encapsulation as shown in Figure 6. A micro-fluidic channel [32] comprising a tube of diameter equivalent to the desired diameter of the final imaging phantoms is fed with a constant flow of carrier liquid [C] where the carrier liquid is selected to be immiscible with a solution of a photopolymer [P] capable of being polymerised by light. Typically the photopolymer comprises an aqueous solution and the carrier fluid comprises an immiscible oil.

The microfluidic channel [32] additionally comprises intercepting side channels [33], [34], [35] and [36] which allow the addition of components into the main channel. Introduction of a polymer solution [P] into the main channel from a side channel [33] where the polymer [P] is immiscible with the carrier liquid results in displacement of the carrier liquid by the entrance of the polymer [33] and by controlling the amount of polymer added to the carrier a discrete round bolus of polymer [38] may be formed. The bolus is moved along the main channel by the flow of the carrier liquid passing a second side channel [34] at which point fluid flow in the side channel is activated to deliver a single bead [39] from a suspension of beads in carrier liquid [B1] into the main channel such that the bead [40] is encapsulated by the bolus of polymer [41]. This process is repeated at further side channels to add further beads to the bolus. At channel [35] a second population of beads [B2] may be added to the passing bolus [42] such that the polymer bolus now contains two beads [43] and [44] and at side channel [36] a third population of beads [B3] is added to the bolus [45] such that the bolus contains three beads.

Further flow of the carrier fluid carries the bolus to a photopolymerisation region where the polymer of the bolus [46] is polymerised by light [48] from a suitable light source [47] surrounding the channel. The resultant polymer beads [49] exit the micro-fluidic channel into a collecting chamber ready for washing and use as three-dimensional imaging phantoms.

By suitable selection of the diameter of the main channel of the device, the side channels and the beads used in the process the resultant phantoms may be fabricated to mimic a variety of biological structures. For example use of a device comprising a main channel of diameter 30μm and side channels of 10μm, 5μm and 2μm in conjunction with three bead-types of diameter 10μm, 5μm and 2μm would enable the preparation of spherical phantoms of 30μm diameter containing 10μm, 5μm and 2μm beads suitable for representing a typical mammalian cell in microscopy imaging. In such an imaging phantom, the polymer shell represents the cell cytoplasm, the 10μm bead represents the nucleus and the 5μm and 2μm beads represent sub-cellular organelles.

For preparation of imaging phantoms the polymer [P] and the beads [B1], [B2] and [B3] comprise a coloured dye, a fluorescent dye, a refractive index modifier or any other agent suitable for visualisation by the microscopy technique to be employed in imaging the phantom, where each of the polymer and bead populations comprise different imaging agents.

While preferred illustrative embodiments of the present invention are described, one skilled in the art will appreciate that the present invention can be practiced by other than the described embodiments, which are presented for purposes of illustration only and not by way of limitation. The present invention is limited only by the claims that follow.

**Claims**

1. A solid prefabricated polymeric matrix material comprising one or more detectable internal elements which when imaged by microscopy are representative of cells or tissue.

2. The polymeric matrix material according to claim 1, wherein said solid polymeric matrix material is substantially spherical and said detectable internal elements comprise encapsulated beads.

3. The polymeric matrix material according to claim 2, wherein said detectable internal elements are representative of organelles of a eukaryotic cell.

4. The polymeric matrix material according to claim 2 or claim 3, wherein said matrix material and each of said one or more detectable internal elements comprises a visualisation agent.

5. The polymeric matrix according to claim 4, wherein said visualisation agent is detectably different in each of the matrix and said one or more of the detectable elements.

6. The polymeric matrix according to claims 4 and 5, wherein said visualisation agent is selected from coloured dyes, fluorescent dyes or refractive index modifiers.

7. An imaging phantom comprising one or more substantially spherical polymer matrices according to any of claims 2 to 6 said imaging phantom being detectable by a microscopy technique.

8. The imaging phantom according to claim 7, wherein said microscopy technique is light microscopy.

9. The imaging phantom according to claim 8, wherein said microscopy technique is fluorescence microscopy.

10. The imaging phantom according to claim 7, wherein said microscopy technique is phase contrast microscopy.

11. A method for calibration and/or validation of an imaging microscope the method comprising:

    a) providing an imaging microscope;
    b) providing one or more imaging phantoms according to any of claims 7 to 10, said imaging phantom(s) comprising a solid prefabricated polymeric matrix comprising one or more detectable internal elements which when imaged by microscopy is representative of cells or tissue;
    c) acquiring one or more images of said one or more imaging phantom(s) at a first time ($T_1$);
    d) acquiring one or more images of said one or more imaging phantom(s) at a second time ($T_2$);
    e) using said images to quantitatively compare the performance of the imaging microscope at said first time ($T_1$) and said second time ($T_2$) with reference to known characteristics of the said imaging phantoms.

12. A method for optimising the settings of an imaging microscope the method comprising:

    a) providing an imaging microscope;
    b) providing one or more imaging phantoms according to any of claims 7 to 10, said imaging phantom(s) comprising a solid prefabricated polymeric matrix comprising one or more detectable internal elements which when imaged by microscopy is representative of cells or tissue;
    c) acquiring one or more images of said one or more imaging phantom(s) using a first selection of settings ($S_1$);
    d) acquiring one or more images of the imaging phantom(s) using a second selection of settings ($S_2$);
    e) using said images to quantitatively compare the performance of the imaging microscope at said first setting $(S_1)$ and said second setting $(S_2)$ with reference to known characteristics of the said imaging phantoms.

13. A method for calibration and/or validation and/or optimisation of image analysis software the method comprising:

a) providing an imaging microscope;
b) providing suitable image analysis software for quantitative analysis of images produced by said microscope;
c) providing one or more imaging phantoms according to any of claims 7 to 10, said imaging phantom(s) comprising a solid prefabricated polymeric matrix comprising one or more detectable internal elements which when imaged by microscopy is representative of cells or tissue;
d) acquiring one or more images of the or each imaging phantom
e) using said analysis software to produce quantitative data from said images;
f) using said data to quantitatively determine the performance of said software for image analysis with reference to known characteristics of the said imaging phantoms.

14. The method according to any of claims 11 to 13, wherein each of said one or more imaging phantoms is different one from the other.

# FIGURE 1

# FIGURE 2

# FIGURE 3

# FIGURE 4

# FIGURE 5

EP 2 270 476 A1

FIGURE 6

19

Europäisches
Patentamt

European
Patent Office

Office européen
des brevets

# EUROPEAN SEARCH REPORT

Application Number

EP 10 17 9825

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | B.W. POGUE, M.S. PATTERSON: "Review of tissue simulating phantoms for optical spectroscopy, imaging, dosimetry", JOURNAL OF BIOMEDICAL OPTICS, vol. 11, no. 4, 2006, pages 041102-1-041102-16, XP002511682, * the whole document * | 4-6,9-14 | INV. G01N21/64 |
| X | US 2002/098588 A1 (SAMMAK PAUL [US] ET AL) 25 July 2002 (2002-07-25) * figures 1d,2f * * paragraphs [0005] - [0007], [10.20], [0023], [0025], [0031], [0032], [0042], [0046] - [0050], [0067] - [0072] * | 1 | |
| X | WO 02/063269 A (ARGOSE INC [US]; APRUZZESE WILLIAM [US]; TREPAGNIER PIERRE [US]; GRAY) 15 August 2002 (2002-08-15) * page 7, lines 18-24; figure 1 * | 1 | |
| X | R. LANGER, J.P. VACANTI: "Tissue engineering", SCIENCE, vol. 260, 14 May 1993 (1993-05-14), pages 920-926, XP002532346, | 1-3,7,8 | TECHNICAL FIELDS SEARCHED (IPC) G01N |
| Y | * the whole document * | 4-6,9-14 | |
| A | EP 1 227 312 A (THYSSENKRUPP STAHL AG [DE]) 31 July 2002 (2002-07-31) * the whole document * | 8-10 | |
| A | WO 2005/057185 A (FOSS ANALYTICAL AB [SE]; COWE IAN [GB]; SPRINGSTEEN ARTHUR [US]) 23 June 2005 (2005-06-23) * figure 1 * | 8-10 | |

-/--

The present search report has been drawn up for all claims

| Place of search | Date of completion of the search | Examiner |
|---|---|---|
| Munich | 23 November 2010 | Fazio, Valentina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EUROPEAN SEARCH REPORT

Application Number

EP 10 17 9825

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JM LERNER: "Calibration and validation of confocal spectral imaging systems", CYTOMETRY PART A, vol. 62a, 2004, pages 8-34, XP002511683, * the whole document * | 8-14 | |
| A | US 2006/275182 A1 (HUDSON GORDON S [US]) 7 December 2006 (2006-12-07) * paragraphs [0010] - [0016]; figures 1-3 * | 8-10 | |
| A | EP 0 368 436 A (HAMAMATSU PHOTONICS KK [JP]) 16 May 1990 (1990-05-16) * page 5, lines 9-17; figure 5 * | 1-14 | |

TECHNICAL FIELDS
SEARCHED      (IPC)

The present search report has been drawn up for all claims

| Place of search | Date of completion of the search | Examiner |
|---|---|---|
| Munich | 23 November 2010 | Fazio, Valentina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 17 9825

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2010

| Patent document cited in search report | | Publication date | Patent family member(s) | | Publication date |
|---|---|---|---|---|---|
| US 2002098588 | A1 | 25-07-2002 | US | 2005176056 A1 | 11-08-2005 |
| WO 02063269 | A | 15-08-2002 | AU | 2002251877 A1 | 19-08-2002 |
| EP 1227312 | A | 31-07-2002 | DE | 10103174 A1 | 22-08-2002 |
| WO 2005057185 | A | 23-06-2005 | AT | 445151 T | 15-10-2009 |
| | | | AU | 2004297494 A1 | 23-06-2005 |
| | | | EP | 1700099 A1 | 13-09-2006 |
| | | | US | 2007289355 A1 | 20-12-2007 |
| US 2006275182 | A1 | 07-12-2006 | NONE | | |
| EP 0368436 | A | 16-05-1990 | GB | 2224829 A | 16-05-1990 |
| | | | JP | 2128750 A | 17-05-1990 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070190566 A
- US 6984828 B, Montagu
- US 6472671 B, Montagu
- US 20060134606 A, Montagu
- US 7262842 B, Ermantraut
- EP 1774292 A, Ge
- EP 259137 A, Schwartz
- WO 2006003423 A
- WO 2007056977 A
- US 20080233652 A
- WO 9849537 A, Brakenhoff
- US 4268486 A, Waggoner
- US 20060063880 A, Khanna

**Non-patent literature cited in the description**

- **Pogue, B.W. ; Patterson, M.S.** *J. Biomed. Opt.,* 2006, vol. 11, 041102
- *J. Neurosurg.,* 2004, vol. 101 (2), 314-22
- **Lerner, J.M. ; Zuckerm, R.M.** *Cytometry A.,* 2004, vol. 62 (1), 8-34
- **Schwartz, A. et al.** *Cytometry,* 1998, vol. 33 (2), 106-14
- *Methods Enzymol.,* 2006, vol. 414, 468-83
- *Biotechnol. J.,* 2007, vol. 2 (8), 938-40
- *Histochem J.,* 1999, vol. 8, 495-505
- *Methods Mol. Biol.,* 1999, vol. 115, 275-9
- *Biomacromolecules,* 2005, vol. 6 (1), 414-24
- *Biomaterials,* 2001, vol. 22 (9), 929-41
- **Southwick et al.** *Cytometry,* 1990, vol. 11, 418-430
- **Mujumdar et al.** *Bioconjugate Chemistry,* 1993, vol. 4, 105-111
- **Waggoner, A.S.** Fluorescent Probes for Analysis of Cell Structure and Function and Health by Flow and Imaging Cytometry. Alan R. Liss, 1986
- Molecular Probes Handbook of Fluorescent Probes and Research Chemicals. Molecular Inc, 1996